# EUROPEAN PATENT APPLICATION

(11) **EP 4 525 286 A1**
(43) Date of publication of application: **19.03.2025**
(21) Application number: 23460032.8
(22) Date of filing: 12.09.2023
(51) Int. Cl.: H02M 1/36, H02M 7/10

(54) **ELECTRICAL CIRCUIT AND METHOD FOR CHARGING A MAIN CAPACITOR**

(71) Applicant: TRUMPF Huettinger Sp. Z o. o., 05-220 Zielonka (PL)
(72) Inventor: The designation of the inventor has not yet been filed
(74) Representative: Trumpf Patentabteilung

(57) **Abstract**

The invention relates to an electrical circuit (10) for charging a main capacitor (12) with some features according to claim 1 and a method for charging a main capacitor (12) with some features according to claim 10.

## Description

The invention relates to an electrical circuit for charging a main capacitor with some features according to claim 1 and a method for charging a main capacitor with some features according to claim 10.

When charging a capacitor, in particular a capacitor with high capacity, the current can rise above a critical value. In particular the current surge during system start-up can cause overcurrent issues. Therefore, it is desirable to limit the current during charging of the capacitor.

The task to be solved is to provide an electrical circuit and a method for charging a main capacitor while overcoming the overcurrent issues.

The above task is solved by an electrical circuit for charging a main capacitor with the features of claim 1.

The circuit comprises a voltage source connection port for connecting an alternating voltage source and an output port for connecting the main capacitor comprising two output port connection points. The voltage source connection port can also comprise two connection points.

The electrical circuit comprises a first capacitor and a second capacitor connected in a first serial circuit. The electrical circuit comprises a first diode and a second diode connected in a second seral circuit. The first and the second serial circuits are connected in a parallel circuit which is connected with its both ends to the output port connection points.

The electrical circuit comprises a first inductivity with a fist connection point connected to the voltage source connection port and a second connection point. The second connection point is connected between the first and the second capacitors. Alternatively, the second connection point is connected between the first and the second diodes.

Between the first and the second capacitors can be a connection point connected to the voltage source port, in particular to one of its two connection points. Alternatively, between the first and the second diodes can be a connection point connected to the voltage source port, in particular to one of its two connection points.

In the present case, "connection" or "connected" refers to an electrical connection. In other words, two connected points or elements are in an electrical connection.

With this the charging current can be limited to a safe value. The overcurrent issues can be overcome. In particular the problem of current surge during system start-up can be overcome. When connected to an alternating voltage source the electrical circuit behaves like a voltage source, which after exceeding a certain current, begins to work as a current source. The electrical circuit in particular represents a resonant system. The electrical circuit can be used in all generators, in particular plasma power supply.

The electrical circuit can serve as a current limiter for a voltage source. Further, it is possible to provide a current limit without any additional current measure and control loops. In particular, there is no significant voltage drop on the output port when current is less that the limit. Simultaneous configuration of zero-voltage switching and zero-current switching with H-bridge (circuit) as a power source is possible.

According to an embodiment of the electrical circuit, the electrical circuit can comprise a second inductivity with a third connection point connected to the voltage source connection port and a fourth connection point. The second connection point of the first inductivity can be connected between the first and the second diodes. The fourth connection point of the second inductivity can be connected between the first and the second capacitors.

With this, the resonance of the electrical circuit or system represented by the electrical circuit can be improved further.

According to an embodiment of the electrical circuit, the electrical circuit can comprise the alternating voltage source connected to the voltage source connection port. The alternating voltage source can have two connection points connected to two connection points of the voltage source connection port. The alternating voltage source can supply a voltage that alternates with a, in particular constant, frequency.

With this, the alternating voltage source can be implemented in the electrical circuit with simple means.

According to an embodiment of the electrical circuit, the first and the second serial circuits and at least one of the first and the second inductivities, in particular both inductivities, can be configured as a resonant circuit. The resonant circuit can have a resonant frequency that is dependent on a frequency of the alternating voltage source. In particular, when the frequency of the alternating voltage source is constant, the resonant frequency is constant, too. When the frequency of the alternating voltage source changes, the resonant frequency can change, too.

With this, the electrical circuit can be adjusted according to the alternating voltage source and the current limiting function or feature can be improved further.

According to an embodiment of the electrical circuit, the resonant frequency of the resonant circuit can be twice as high as the frequency of the alternating voltage source.

With this the better resonance can be established and the current limiting function can be improved further.

According to an embodiment of the electrical circuit, the electrical circuit can comprise the main capacitor. The main capacitor can be connected to the output port. The main capacitor can have a capacity of 10 µF (microfarad). Alternatively or additionally the main capacitor can be connected to a consumer. The consumer can be connected to the main capacitor via the output port. The consumer can be connected to the output port and/or its connection points. The consumer can have a resistance of over 1 MΩ (megaohm).

With this the main capacitor and/or the consumer can be implemented in the electrical circuit with simple means.

According to an embodiment of the electrical circuit, the first capacitor can have a capacity in a range from 1nF (nanofarad) to 10 nF, in particular of 6,8 nF. Alternatively or additionally the second capacitor can have a capacity in a range from 1nF to 10 nF, in particular of 6,8 nF.

This allows the electrical circuit, especially the resonance of the resonant circuit, to be better matched to the voltage source frequency.

According to an embodiment of the electrical circuit, the first inductivity can be in a range from 10 µH (microhenry) to 100 µH, in particular 47 µH. Alternatively or additionally the second inductivity can be in a range from 10 µH to 100 µH, in particular 47 µH.

This allows the electrical circuit, especially the resonance of the resonant circuit, to be better matched to the main capacitor.

According to an embodiment of the electrical circuit, the first and the second capacitors can be identical. Alternatively or additionally the first and the second diodes can be identical. Alternatively or additionally the first and the second inductivities can be identical.

This allows the electrical circuit, especially the resonance of the resonant circuit, to be better matched to the main capacitor. Further, the resonant circuit can be realized with simple means.

The above task is solved by a method for charging a main capacitor with the features of claim 10.

The method comprises the steps of:
Providing the main capacitor. The main capacitor can have a capacity of 10 µF. Alternatively or additionally the main capacitor can be connected to a consumer. The consumer can have a resistance of over 1 MΩ (megaohm)

Providing an alternating voltage source with an alternating frequency. The alternating frequency can be constant or can be varied.

Providing a resonant circuit with at least two diodes connected between the main capacitor and the voltage source with a resonant frequency that is dependent on the frequency of the alternating voltage source. The resonant circuit can have at least a first capacitor and a second capacitor.

Charging the main capacitor by means of the alternating voltage source.

With this the charging current can be limited to a safe value. The overcurrent issues can be overcome. In particular the problem of current surge during system start-up can be overcome. When connected to an alternating voltage source the resonant circuit behaves like a voltage source, which after exceeding a certain current, begins to work as a current source. The resonant circuit in particular represents a resonant system.

The method can be used in all generators, in particular plasma power supply. The resonant circuit can serve as a current limiter for a voltage source. Further, it is possible to provide a current limit without any additional current measure and control loops. In particular, there is no significant voltage drop on an output port when current is less that the limit. Simultaneous configuration of zero-voltage switching and zero-current switching with H-bridge (circuit) as a power source is possible.

According to an embodiment of the method, the resonant frequency of the resonant circuit is twice as high as the frequency of the alternating voltage source.

With this the better resonance can be established and the current limiting function can be improved further.

According to an embodiment of the method, the method can be executed with an electrical circuit according to the above explanations.

With regard to the advantages that can be achieved in this manner, reference is made to the explanations on the electrical circuit in this respect. The measures described in connection with the electrical circuit and/or those explained below can be used for the further embodiment of the method.

Further features, details and advantages of the invention are apparent from the wording of the claims and from the following description of embodiments based on the drawings. Showing:
- Fig. 1: a schematic diagram of an electrical circuit according to a first embodiment;
- Fig. 2: a schematic diagram of the electrical circuit according to a second embodiment and
- Fig. 3: a schematic diagram of the electrical circuit according to a third embodiment.

In the following description and in the figures, the corresponding components and elements have the same reference signs.

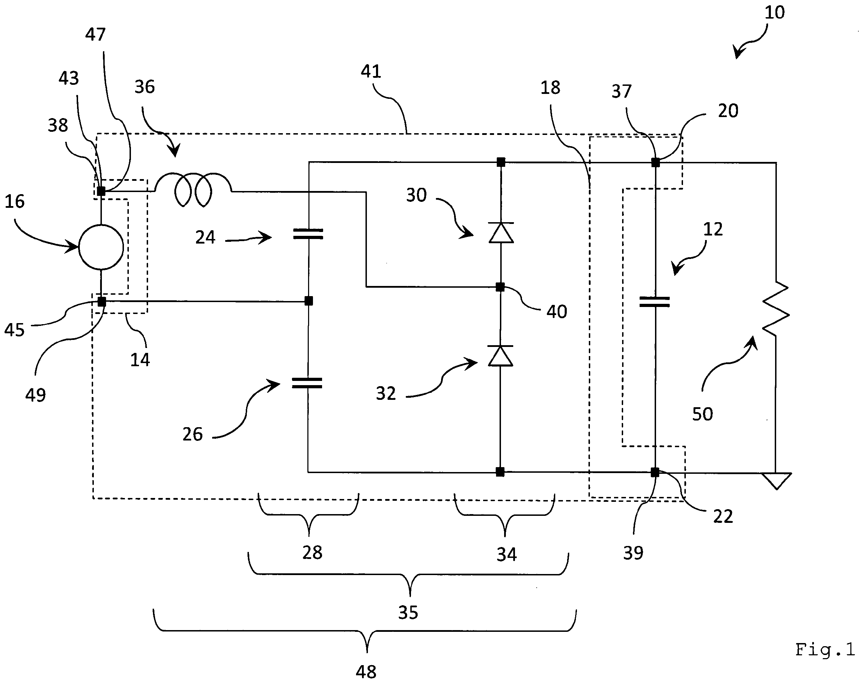

Figure 1 shows a schematic diagram of an electrical circuit 10 according to a first embodiment.

The electrical circuit 10 is designed for charging a main capacitor 12. The electrical circuit 10 comprises a voltage source connection port 14 for connecting an alternating voltage source 16. The electrical circuit 10 comprises an output port 18 for connecting the main capacitor 12. The output port 18 comprises two output port connections points 20, 22.

The electrical circuit 10 comprises a fist capacitor 24 and a second capacitor 26. The first and the second capacitors 24, 26 are connected in a first serial circuit 28.

The first and the second capacitors 24, 26 each can have a capacity in a range from 1 nF to 10 nF, in particular of 6,8 nF. The first and the second capacitors 24, 26 can be identical.

The electrical circuit 10 comprises a first diode 30 and a second diode 32. The first and the second diodes 30, 32 are connected in a second serial circuit 34. The first and the second diodes 30, 32 can be identical.

The first and the second serial circuits 28, 34 are connected in a parallel circuit 35. The parallel circuit 35 is connected with its both ends 37, 39 to the output pot connection points 20, 22.

The electrical circuit 10 comprises a first inductivity 36 with a first connection point 38 and a second connection point 40. The first connection point 38 is connected to the voltage source connection port 14.

In the first embodiment (shown in Figure 1), the second connection point 40 of the first inductivity 36 is connected between the first and the second diodes 30, 32.

The first inductivity 36 can be in a range from 10 µH to 100 µH, in particular 47 µH.

In the present case, the electrical circuit 10 comprises the alternating voltage source 16. The alternating voltage source 16 is connected to the voltage source connection port 14. For this the alternating voltage source 16 has two connection points 43, 45 that are connected to two connection points 47, 49 of the voltage source connection port 14.

The first connection point 38 of the first inductivity 36 can be connected to one of the two connection points 47, 49 of the voltage source connection port 14.

In present case the first and the second serial circuits 28, 34 and the first inductivity 36 form a resonant circuit 48 which has a resonant frequency that is dependent on a frequency of the alternating voltage source 16. The resonant frequency can be twice as high as the frequency of the alternating voltage source 16.

In the present case, the electrical circuit 10 comprises the main capacitor 12. The main capacitor 12 is connected to the output port 18. The main capacitor 12 is connected to a consumer 50 via the output port 18. The main capacitor 12 can have a capacity of 10 µF.

In the present case, the dashed line 41 marks the smallest form of the electrical circuit 10, which in present case consists of the voltage source connection port 14, the output port 18, the first and the second capacitors 24, 26, the first and the second diodes 30,32 and the first inductivity 36.

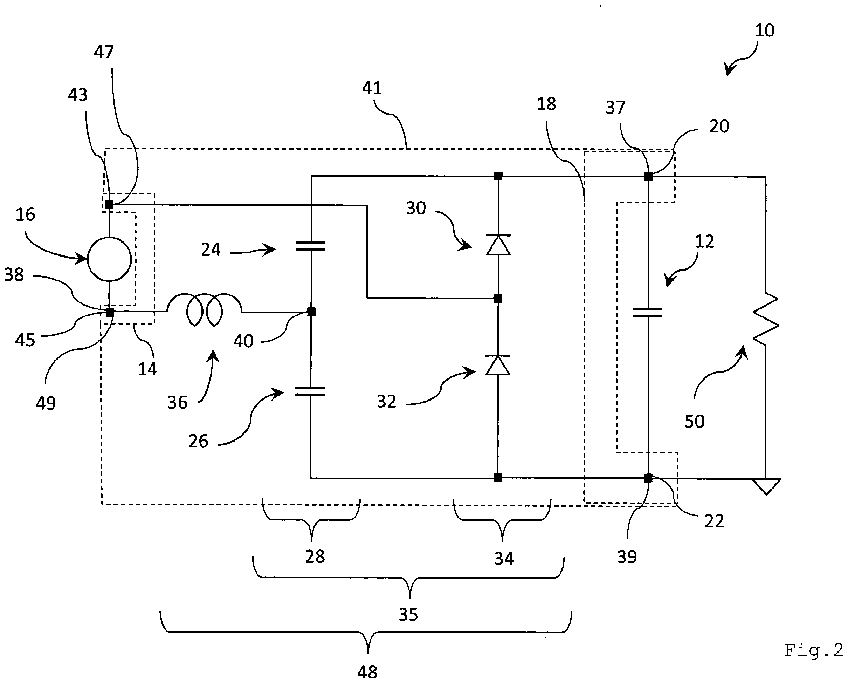

Figure 2 shows a schematic diagram of the electrical circuit 10 according to a second embodiment. The second embodiment differs from the first embodiment in the following:
The second connection point 40 of the first inductivity 36 is connected between the first and the second capacitors 24, 26.

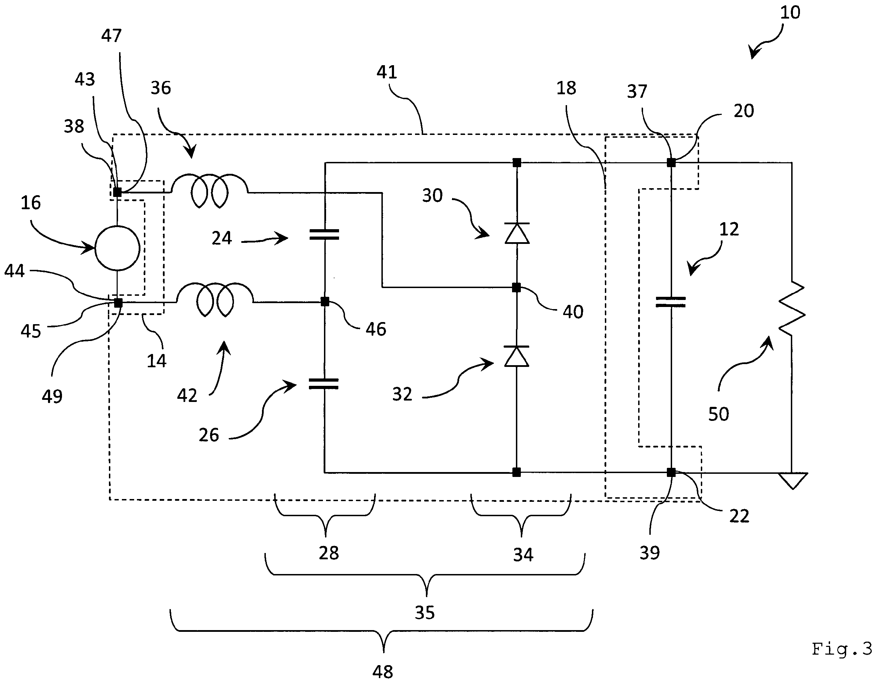

Figure 3 shows a schematic diagram of the electrical circuit 10 according to a third embodiment. The third embodiment differs from the first embodiment in the following:
The electrical circuit 10 comprises a second inductivity 42 with a third connection point 44 and a fourth connection point 46. The third connection point 44 of the second inductivity 42 is connected to the voltage source connection port 14.

The second connection point 40 of the first inductivity 36 is connected between the first and the second diodes 30, 32. The fourth connection point 46 of the second inductivity 42 is connected between the first and the second capacitors 24, 26.

The first connection point 38 of the first inductivity 36 can be connected to one of the two connection points 47, 49 of the voltage source connection port 14. The third connection point 44 can be connected to the other one of the two connection points 47, 49 of the voltage source connection port 14.

In present case the first and the second serial circuits 28, 34 and the first and the second inductivities 36, 42 form a resonant circuit 48 which has a resonant frequency that is dependent on a frequency of the alternating voltage source 16. The resonant frequency can be twice as high as the frequency of the alternating voltage source 16.

The second inductivity 42 can be in a range from 10 µH to 100 µH, in particular 47 µH. The first and the second inductivities 36, 42 can be identical.

In the present case, the dashed line 41 marks the smallest form of the electrical circuit 10, which in present case consists of the voltage source connection port 14, the output port 18, the first and the second capacitors 24, 26, the first and the second diodes 30,32 and the first and the second inductivities 36, 42.

The electrical circuit 10 according to the above three embodiments (Figures 1 to 3) is characterized by impedance (Formula for wave impedance). When the main capacitor 12 is discharged, then the current is limited by this impedance. This happens in particular as a consequence of the following phenomenon:
At a first time T1 when the polarity of the voltage of the alternating voltage source 16 changes, the current drawn from the alternating voltage source 16 has a sinusoidal shape, and its amplitude depends on the wave impedance. The current tends to zero, halfway through the positive voltage of the alternating voltage source 16. This is because the resonant frequency of the resonant circuit 48 can be exactly twice as high as the frequency of the alternating voltage source 16.

Then, at a second time T2, the energy returns to the alternating voltage source 16, due to the fact that the main capacitor 12 is discharged and is not able to accept all the energy supplied at T1.

Then there is a change in the polarity of the voltage of the alternating voltage source 16 and the whole process starts from the beginning.

Thus, the main capacitor 12 is charged with a limited current depending on the impedance of the resonant circuit 48. The return of energy to the alternating voltage source 16 decreases gradually with the increase of voltage across the main capacitor 12 until it practically ceases when the voltage reaches a target value.

A method for charging a main capacitor 12 will be described in the following with reference to the Figures 1 to 3:
The method comprises the steps of:
Providing the main capacitor 12. The main capacitor 12 can be a main capacitor 12 according to the above explanations.

Providing an alternating voltage source 16 with an alternating frequency. The alternating voltage source 16 can be an alternating voltage source 16 according to the above explanations.

Providing a resonant circuit 48 with at least two diodes 30, 32 connected between the main capacitor 12 and the voltage source 16 with a resonant frequency that is dependent on the frequency of the alternating voltage source 16. The resonant circuit 48 can be a resonant circuit 48 according to the above explanations.

Charging the main capacitor 12 by means of the alternating voltage source 16.

Thereby the resonant frequency of the resonant circuit 48 can be twice as high as the frequency of the alternating voltage source 16.

The method can be executed with an electrical circuit 10 according to any one of the above embodiments.

## Claims

1. Electrical circuit (10) for charging a main capacitor (12) comprising:
- a voltage source connection port (14) for connecting an alternating voltage source (16),
- an output port (18) for connecting the main capacitor (12) comprising two output port connection points (20,22),
- a first capacitor (24) and a second capacitor (26) connected in a first serial circuit (28),
- a first diode (30) and a second diode (32) connected in a second seral circuit (34),
wherein the first and the second serial circuits (28, 34) are connected in a parallel circuit (35) which is connected with its both ends (37, 39) to the output port connection points (20, 22),
- a first inductivity (36) with a fist connection point (38) connected to the voltage source connection port(14) and a second connection point (40), wherein the second connection point (40) is connected between the first and the second capacitors (24, 26) or between the first and the second diodes (30, 32).

2. Electrical circuit (10) according to claim 1, **characterized in that** the electrical circuit (10) comprises a second inductivity (42) with a third connection point (44) connected to the voltage source connection port (14) and a fourth connection point (46), wherein the second connection point (40) of the first inductivity (36) is connected between the first and the second diodes (30, 32) and the fourth connection point (46) of the second inductivity (42) is connected between the first and the second capacitors (24, 26).

3. Electrical circuit (10) according to claim 1 or 2, **characterized in that** the electrical circuit (10) comprises the alternating voltage source (16) connected to the voltage source connection port (14).

4. Electrical circuit (10) according to the preceding claim, **characterized in that** the first and the second serial circuits (28, 34) and at least one of the first and the second inductivities (36, 42), in particular both inductivities (36, 42), are configured as a resonant circuit (48) which has a resonant frequency that is dependent on a frequency of the alternating voltage source (16).

5. Electrical circuit (10) according to the preceding claim, **characterized in that** the resonant frequency of the resonant circuit (48) is twice as high as the frequency of the alternating voltage source (16).

6. Electrical circuit (10) according to any one of the preceding claims, **characterized in that** the electrical circuit (10) comprises the main capacitor (12), wherein the main capacitor (12) is connected to the output port (18), in particular wherein the main capacitor (12) has a capacity of 10 µF and/or is connected to a consumer (50).

7. Electrical circuit (10) according to any one of the preceding claims, **characterized in that** the first and/or the second capacitors (24, 26) each has a capacity in a range from 1 nF to 10 nF, in particular of 6,8 nF.

8. Electrical circuit (10) according to any one of the preceding claims, **characterized in that** the first and/or the second inductivity (36, 42) are each in a range from 10 µH to 100 µH, in particular 47 µH.

9. Electrical circuit (10) according to any one of the preceding claims, **characterized in that** the first and the second capacitors (24, 26), the first and the second diodes (30, 32) and/or the first and the second inductivities (36, 42) are respectively identical.

10. Method for charging a main capacitor (12), comprising the steps of:
- Providing the main capacitor (12);
- Providing an alternating voltage source (16) with an alternating frequency;
- Providing a resonant circuit (48) with at least two diodes (30, 32) connected between the main capacitor (12) and the voltage source (16) with a resonant frequency that is dependent on the frequency of the alternating voltage source (16)
- Charging the main capacitor (12) by means of the alternating voltage source (16).

11. Method according to the preceding claim, **characterized in that** the resonant frequency of the resonant circuit (48) is twice as high as the frequency of the alternating voltage source (16).

12. Method according to any one of the two preceding claims, **characterized in that** the method is executed with an electrical circuit (10) according to any one of the preceding claims.
